Europäisches Patentamt

European Patent Office

Office européen des brevets

(19)

(11) Veröffentlichungsnummer : **0 448 568 B1**

(12) **EUROPÄISCHE PATENTSCHRIFT**

(45) Veröffentlichungstag der Patentschrift :
21.07.93 Patentblatt 93/29

(21) Anmeldenummer : 89912627.0

(22) Anmeldetag : 11.11.89

(86) Internationale Anmeldenummer :
PCT/EP89/01353

(87) Internationale Veröffentlichungsnummer :
WO 90/06875 28.06.90 Gazette 90/15

(51) Int. Cl.⁵ : **B60T 8/66**

(54) **ANTIBLOCKIERREGELSYSTEM.**

(30) Priorität : **14.12.88 DE 3841956**

(43) Veröffentlichungstag der Anmeldung :
**02.10.91 Patentblatt 91/40**

(45) Bekanntmachung des Hinweises auf die
Patenterteilung :
**21.07.93 Patentblatt 93/29**

(84) Benannte Vertragsstaaten :
**DE FR GB SE**

(56) Entgegenhaltungen :
**WO-A-88/06544**
**GB-A- 2 181 505**
**US-A- 3 718 374**
**US-A- 3 807 811**
**US-A- 3 934 939**

(73) Patentinhaber : **ROBERT BOSCH GMBH**
**Postfach 30 02 20**
**W-7000 Stuttgart 30 (DE)**

(72) Erfinder : **BEYER, Claus**
**Posenerstrasse 19**
**W-7141 Schwieberdingen (DE)**
Erfinder : **DOMINKE, Peter**
**Rechentshofener Strasse 9**
**W-7120 Bietigheim-Bissingen (DE)**
Erfinder : **HERLIN, Ulf**
**Mainzer Allee 21**
**W-7140 Ludwigsburg (DE)**
Erfinder : **BIELESCH, Joachim**
**Schillerstrasse 78**
**W-7130 Mühlacker (DE)**

(74) Vertreter : **Kammer, Arno, Dipl.-Ing.**
**ROBERT BOSCH GmbH Zentralabteilung**
**Patente Postfach 30 02 20**
**W-7000 Stuttgart 30 (DE)**

EP 0 448 568 B1

**Beschreibung**

Stand der Technik

Aus der WO 88/06544 Fig. 7 mit zugehöriger Beschreibung ist es bekannt, bei einem Antiblockierregelsystem mit Verwendung des Schlupfes der Räder als Regelgröße zur Schlupfbildung ein Referenzgeschwindigkeitssignal und ein Hilfsreferenzgeschwindigkeitssignal zu erzeugen. Bei dem Hilfsreferenzgeschwindigkeitssignal bestimmt das schnellste Rad dessen Verlauf. Die Steigung dieses Hilfsreferenzgeschwindigkeitssignals dient nur zur Festlegung der Steigung des Referenzgeschwindigkeitssignals während der Istabilität eines Rades, wobei die Größe der Referenz zumindest im Regelfall sonst durch das zweitschnellste Rad bestimmt wird.

Aus der US-PS 3718 374 ist ein Antiblockierregelsystem bekannt, bei dem die Radgeschwindigkeit zum Zeitpunkt des Bremsbeginns gemessen und als Fahrzeuggeschwindigkeit abgespeichert wird. Der Bremsdruck wird während der Bremsung ebenfalls gemessen und eine dazu proportionale Größe wird integriert. Diese integrierte Größe wird mit der gespeicherten Fahrzeuggeschwindigkeit verglichen und die Differenz wird ihrerseits mit der Radgeschwindigkeit verglichen, woraus sich das Steuersignal für das Bremsregelsystem ergibt.

Vorteile der Erfindung

Die Vorteile der Erfindung und ihrer Ausgestaltungen gemäß den Unteransprüchen bringt eine weiteren Annäherung der Referenzgeschwindigkeit an die tatsächliche Fahrzeuggeschwindigkeit und damit eine Verbesserung der Regelung insgesamt, insbesondere bei extremen Verhältnissen wie μ-Sprüngen und im Anbremsfall.

Figurenbeschreibung

Anhand der Zeichnung soll ein Ausführungsbeispiel der Erfindung näher erläutert werden.
Es zeigen:
Fig. 1    ein Blockschaltbild des Ausführungsbeispiels
Fig. 2    das Verhalten der Signale bei negativen μ-Sprung

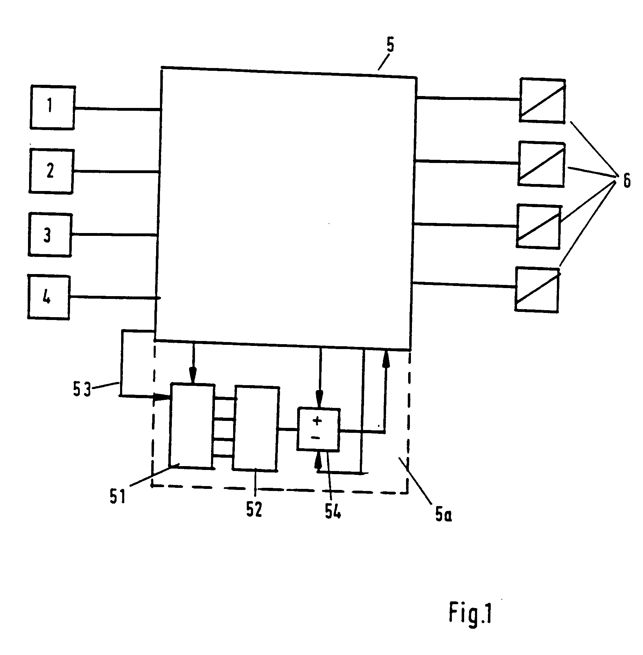

In Fig. 1 sind mit 1 - 4 den Fahrzeugrädern zugeordneten Radgeschwindigkeitsmeßwertgeber bezeichnet, die ihre Signale an eine Auswerteschaltung 5 geben. Diese steuert ihrerseits aufgrund der Meßwertgebersignale den Rädern zugeordnete 3/3 Magnetventile 6 und variiert den Bremsdruck an den Rädern im Sinne der Vermeidung eines zu großen Bremsschlupfs.

Hierzu kann der Bremsschlupf gebildet und mit einem Sollbremsschlupf verglichen werden oder der Schlupf in anderer Weise zur Druckregelung benutzt oder mit benutzt werden. Unter Schlupf soll hier sowohl die Differenz zwischen der Referenzgeschwindigkeit und der Radgeschwindigkeit als auch diese Differenz bezogen auf die Referenzgeschwindigkeit verstanden werden.

Zur Schlupfbildung wird wie oben gezeigt eine Referenzgeschwindigkeit benötigt. Diese kann wie in der WO 88/06544 anhand der Fig. 7 beschrieben, gebildet werden. Wichtig hier ist, daß zu ihrer Bildung die Steigung eines Hilfsreferenzgeschwindigkeitssignals benutzt wird. Die Bildung des Referenzgeschwindigkeitssignals, das nicht Gegenstand dieser Erfindung ist, geschieht in der Auswertschaltung 5, die erfindungsgemäße Bildung des Hilfsreferenzgeschwindigkeitssignals jedoch im unteren Teil 5a der Auswerteschaltung.

Die Auswerteschaltung 5 liefert an ein Schieberegister 51 die in der Auswerteschaltung 5 in einem vorgegebenen Takt ermittelten Werte der Geschwindigkeit des schnellsten Rads. Das Schieberegister hat $a_1$ Plätze, von denen außerhalb einer ABS-Regelung nur die $a_2$ letzten, z.B. $a_2 = \dfrac{a_1}{4}$ ausgewertet werden.

Jeder neue eingegebene Meßwert bringt den am längsten gespeicherten der $a_2$ Meßwerte aus der Wertung. In jedem Takt werden in einem Block 52 die gerade gespeicherten $a_2$ Meßwerte aufaddiert und durch $a_2$ dividiert. Dieser Wert $a_2'$ wird ebenfalls gespeichert. Der neu erhaltene gefilterte Meßwert wird nun vom am längsten gespeicherten gefilterten Meßwert subtrahiert und die Differenz durch den Ausdruck $(a_2 - 1) \cdot T$ dividiert, wobei T die Taktzeit ist. Das Ergebnis ist ein Maß der Steigung des Hilfsreferenzsignals.

Die Zahl der im Block 52 auswertbaren Plätze ist umschaltbar und wird bei Regelbeginn auf $a_1$ (z.B. $4a_2$) umgeschaltet (Leitung 53). Die Umschaltmöglichkeit hat den Vorteil, daß sich beim Anbremsen eine schnellere und bessere Anpassung ergibt. Das Steigungssignal am Ausgang des Blocks 52 wird nun einem Addieren/ Subtrahierer 54 zugeführt. In der Auswertschaltung 5 ist eine Zeitmeßeinrichtung enthalten, die die Druckabbauphasen an allen Radbremsen während eines Regelzyklus eines Rads bestimmt und in Abhängigkeit von diesem Meßwert einen Wert von dem Steigungssignal abzieht. Wird bei Auftreten eines negativen μ-Sprungs (Eis-

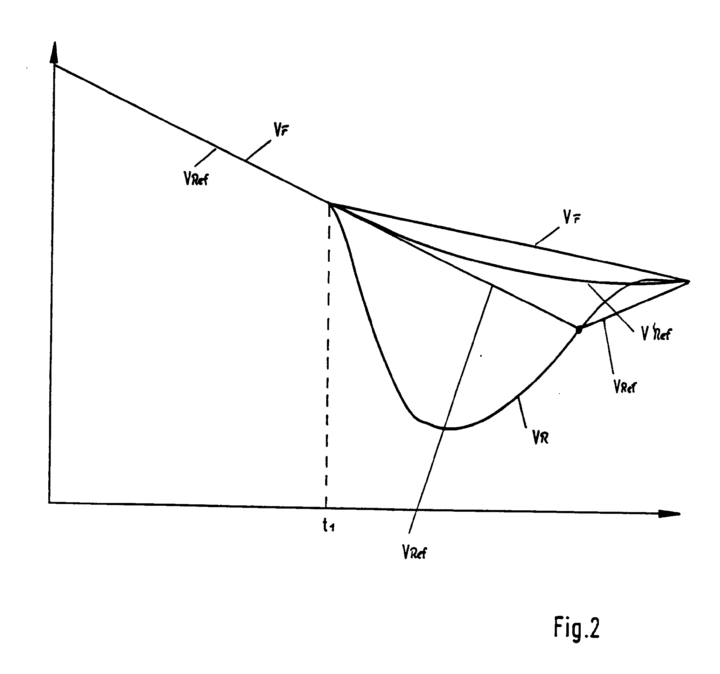

platte) an allen Rädern praktisch gleichzeitig und stark Druck abgebaut, so ist dieser Meßwert groß. Damit wird die Hilfsreferenzsteigung und damit die Referenzsteigung nach kleineren Werten hin korrigiert, was einer dann ja verringerten Fahrzeugverzögerung entspricht. Das so druckabhängig korrigierte Hilfsreferenzsignal wird dann der Auswerteschaltung zur Bestimmung der Steigung des Referenzsignals in Phasen eines Drehzahleinbruches zugeführt. Das Verhalten beim negativen $\mu$-Sprung zeigt Fig. 2, wo bei $t_1$ dieser $\mu$-Sprung auftritt. Die Fahrzeuggeschwindigkeit ist mit $V_F$, das bis $t_1$ damit identische Referenzsignal mit $V_{Ref}$ und das Radgeschwindigkeitssignal mit $V_R$ bezeichnet.

Wie oben erläutert wird ab $t_1$ der Druckabbauzeit gemessen. Die Summe der jeweils gemessene Zeitwerte bewirkt in jedem Takt eine Subtraktion im Addieren/Subtrahieren 54. Damit weist das Hilfsreferenzsignal und damit auch das Referenzsignal $V_{Ref}$ eine laufend sich verringernde (negative) Steigung auf, d.h. das Referenzsignal folgt ab $t_1$ nicht mehr der vorgegebenen $V_{Ref}$ sondern geht in eine $V_{Ref}$ über, die sich sehr viel schneller wieder der Fahrzeuggeschwindigkeit $V_F$ annähert, die ab $t_1$ wegen des Untergrunds ebenfalls eine geringere Steigung aufweist.

In der Auswerteschaltung 5 wird auch durch Zeitmessung festgestellt, ob beim Druckaufbau der Ausgangswert vor Druckabbau wieder überschritten wird (Ende $\mu$-Sprung). Ist dies der Fall, so wird im Addierer 54 dem Steigungswert ein vom prozentualen Überschreiten abhängiger Wert in jedem Takt zuaddiert, so daß die Steigung des Referenzgeschwindigkeitssignals wieder der nun auch größeren Steigung der Fahrzeuggeschwindigkeit angeglichen wird.

Anstelle der Anordnung der Fig. 1 kann auch entsprechend programmierter Rechner die beschriebenen Funktionen ausführen.

Außerhalb der Regelung ist eine schwache Filterung wirksam, da bei starkem Antreten der Bremse eine schnelle Steigerung der Verzögerung möglich ist. Solange das höchstlaufende Rad noch nicht regelt, ist bei bestimmten Fahrzuständen ein "Nachtreten" möglich, wodurch wiederum die Verzögerung zunimmt (z.B. Kurvenfahrt). Dabei darf die Filterung stärker sein als außerhalb der Regelung, muß aber schwächer sein als wenn alle Räder regeln.

## Patentansprüche

1.  Verfahren zum Betrieb eines Antiblockierregelsystems für Fahrzeuge mit Radgeschwindigkeitsmeßwertgebern an den Rädern, einer Auswerteschaltung, der die Signale der Geschwindigkeitsmeßwertgeber zugeführt werden und die daraus Bremsdrucksteuersignale für den Radbremsen zugeordnete Bremsdrucksteuereinrichtungen erzeugt, wobei in der Auswerteschaltung Schlupfsignale unter Zuhilfenahme eines dem Fahrzeuggeschwindigkeitsverlauf angenäherten Referenzgeschwindigkeitssignals erfolgt und wobei ein Hilfsreferenzgeschwindigkeitssignal aus dem gefilterten Signal des jeweils schnellsten Rads gebildet wird und wobei im Falle der laufenden Regelung die Steigung des Hilfsreferenzgeschwindigkeitssignals als Steigung des Referenzgeschwindigkeissignals bei Drehzahleinbruch verwendet wird, dadurch gekennzeichnet, daß die Steigung des Referenzgeschwindigkeitssignals vom Maß des Druckabbaus in einem Regelzyklus abhängig gemacht wird derart, daß mit steigendem Druckabbau pro Zyklus die Steigung des Referenzgeschwindigkeitssignals erniedrigt wird.

2.  Verfahren nach Anspruch 1, dadurch gekennzeichnet, daß die Summe der Druckabbauzeiten an allen Rädern pro Zyklus gebildet wird und daß diese Summe die Erniedrigung der Steigung des Referenzgeschwindigkeitssignals bestimmt.

3.  Verfahren nach Anspruch 1 oder 2, bei dem die Größe des Referenzgeschwindigkeitssignals insb. der Vorderräder in vorgegebenen kleinen Zeitabständen (Rechentakt) ermittelt wird, dadurch gekennzeichnet, daß bei jeder Ermittlung druckabhängig ein kleiner Geschwindigkeitswert zu der ermittelten Größe addiert wird.

4.  Verfahren nach einem der Ansprüche 1 - 3, dadurch gekennzeichnet, daß zusätzlich die Summe der Druckaufbauzeiten aller Räder in einem Zyklus ermittelt wird und daß bei einem gegenüber dem vorhergehenden Druckabbau größeren Druckaufbau die Steigung vergrößert wird.

5.  Verfahren nach Anspruch 4, bei dem die Größe des Referenzgeschwindigkeitssignals in vorgegebenen kleinen Zeitabschnitten (Rechentakt) ermittelt wird, dadurch gekennzeichnet, daß von dem in jedem Takt ermittelten Referenzgeschwindigkeitssignal ein vorzugsweise druckabhängiger Abzug gemacht wird.

**6.** Verfahren nach einem der Ansprüche 1 - 5, bei dem die Filterung des Hilfsreferenzgeschwindigkeitssignals dadurch erfolgt, daß die jeweils neue Radgeschwindigkeitssignalwert durch Mittelung über eine Anzahl a der zuletzten ermittelten Radgeschwindigkeitssignalwerte gewonnen wird und bei dem die Differenz zum vorhergehenden Mittelwert und die Taktzeit die Steigung bestimmt, dadurch gekennzeichnet, daß die Anzahl a außerhalb der Regelung einen Wert $a_1$ entspricht und innerhalb der Regelung einer Wert $a_2$, der deutlich kleiner (etwa $\frac{1}{4}$) ist, entspricht.

**7.** Verfahren nach Anspruch 1 oder 2, dadurch gekennzeichnet, daß die durch Druckabbau vorgenommene Erniedrigung der Hilfsreferenzsteigung erst durchgeführt wird, wenn ein Rad sich wieder im Anlauf befindet und nur solange wie die Beschleunigung des Rades sich zwischen den Werten Schwelle 1 (z.B. Og) < Radbeschleunigung < Schwelle 2 (z.B. +3g) befindet.

**8.** Verfahren nach einem der Ansprüche 1 - 6, dadurch gekennzeichnet, daß die Filterzeitkonstante außerhalb der Regelung einen Wert $a_1$ hat, daß sie, wenn mindestens ein Rad regelt, das höchstlaufende Rad aber nicht in Regelung ist, einen Wert $a_2$ hat, und daß sie wenn das höchstlaufende Rad in Regelung ist, einen Wert $a_3$ hat, wobei $a_1 > a_2 > a_3$.

## Claims

**1.** Method for operating an antiblocking control system for vehicles with wheel speed sensors at the wheels, an evaluation circuit to which the signals of the speed sensors are fed and which produces therefrom brake pressure control signals for brake pressure control devices assigned to the wheel brakes, slip signals occurring in the evaluation circuit with the aid of a reference speed signal which is approximated to the vehicle speed characteristic and an auxiliary reference speed signal being formed from the filtered signal of the respective fastest wheel and, in the case of the ongoing control, the gradient of the auxiliary reference speed signal being used as a gradient of the reference speed signal when there is a dip in the speed of revolution characteristic, characterised in that the gradient of the reference speed signal is made dependent on the degree of pressure reduction in a control cycle in such a way that, with a rising pressure reduction per cycle, the gradient of the reference speed signal is reduced.

**2.** Method according to Claim 1, characterised in that the sum of the pressure reduction times at all the wheels is formed per cycle, and in that this sum determines the reduction of the gradient of the reference speed signal.

**3.** Method according to Claim 1 or 2, in which the size of the reference speed signal, in particular of the front wheels, is determined at predetermined small intervals (computing clock), characterised in that, during each determination, a small speed value is added to the determined variable as a function of pressure.

**4.** Method according to one of Claims 1 - 3, characterised in that, in addition, the sum of the pressure increase times of all the wheels is determined in a cycle, and in that the gradient is increased in the event of a pressure increase which is larger in comparison with the previous pressure reduction.

**5.** Method according to Claim 4, in which the variable of the reference speed signal is determined at small predetermined intervals (computing clock), characterised in that a preferably pressure-dependent subtraction from the reference speed signal determined in each clock.

**6.** Method according, to one of Claims 1 - 5, in which the filtering of the auxiliary reference speed signal takes place in that the respective new wheel speed signal value is acquired by averaging over a number a of the last wheel speed signal values to be determined and in which the difference from the preceding average value and the clock time determines the gradient, characterised in that the number a corresponds, outside the control, to a value $a_1$ and, inside the control, to a value $a_2$ which is significantly smaller (approximately 1/4).

**7.** Method according to Claim 1 or 2, characterised in that the reduction in the auxiliary reference gradient performed by pressure reduction is not carried out until a wheel is starting up again and only for as long as the acceleration of the wheel is located between the values threshold 1 (e.g. Og) < wheel acceleration < threshold 2 (e.g. +3g).

8. Method according to one of Claims 1 - 6, characterised in that the filter time constant has, outside the control, a value $a_1$, in that, if at least one wheel is controlling but the fastest running wheel is not in control, it has a value $a_2$, and in that, if the fastest running wheel is in control, it has a value $a_3$, in which case $a_1 > a_2 > a_3$.

**Revendications**

1. Procédé de mise en oeuvre d'un système de régulation antiblocage pour les véhicules, utilisant des capteurs de vitesse de roue sur les véhicules, un circuit d'exploitation qui reçoit les signaux des capteurs de vitesse et on forme des signaux de commande de pression de frein pour les installations de commande de pression de frein associées aux freins de roue, le circuit d'exploitation formant des signaux de glissement en utilisant de manière auxiliaire un signal de vitesse de référence approchant le tracé de la vitesse du véhicule, et selon lequel on forme un signal auxiliaire de vitesse de référence à partir du signal filtré de la roue respectivement la plus rapide, et lorsque la régulation est en cours, on utilise la pente du signal auxiliaire de vitesse de référence comme pente du signal de référence de vitesse pour une chute de la vitesse de rotation, procédé caractérisé en ce qu'on fait dépendre la pente du signal de vitesse de référence de l'amplitude de la diminution de pression dans un cycle de régulation de façon qu'avec une diminution croissante de la pression par cycle, la pente du signal de vitesse de référence diminue.

2. Procédé selon la revendication 1, caractérisé en ce qu'on forme la somme des durées de diminution de pression sur toutes les roues par cycle et en ce que cette somme détermine l'abaissement de la pente du signal de vitesse de référence.

3. Procédé selon la revendication 1 ou 2, selon lequel on détermine l'amplitude du signal de vitesse de référence, notamment des roues avant dans des intervalles de temps réduits, prédéterminés (cycle de calcul), procédé caractérisé en ce qu'à chaque détermination, on additionne une petite valeur de vitesse à la grandeur obtenue, en fonction de la pression.

4. Procédé selon l'une des revendications 1 à 3, caractérisé en ce qu'en plus on détermine la somme des temps de diminution de pression de toutes les roues dans un cycle et si par rapport à une diminution de pression précédente, on a une diminution de pression plus grande, on augmente la pente.

5. Procédé selon la revendication 4, selon lequel on détermine l'amplitude du signal de vitesse de référence dans des intervalles de temps réduits, prédéterminés (cadence de calcul), procédé caractérisé en ce qu'on retranche une valeur qui dépend de préférence de la pression, de chaque signal de vitesse de référence déterminé dans chaque cadence.

6. Procédé selon l'une des revendications 1 - 5, selon lequel on filtre le signal auxiliaire de vitesse de référence en obtenant la nouvelle valeur du signal de vitesse de roue en faisant la moyenne d'un nombre (a) de valeurs de vitesse de roue obtenu en dernier lieu, et selon lequel on définit la pente à partir de la différence de la valeur moyenne précédente et de la période, procédé caractérisé en ce que le nombre (a) en dehors de la régulation, correspond à une valeur $(a_1)$ et à l'intérieur de la régulation à une valeur $(a_2)$ qui est significative en plus faible (environ $\frac{1}{4}$).

7. Procédé selon la revendication 1 ou 2, caractérisé en qu'on abaisse la pente de la référence auxiliaire par diminution de pression que lorsqu'une roue est de nouveau entraînée et aussi longtemps que l'accélération de roue est comprise entre les valeurs seuil 1 (par exemple Og) inférieures, accélération de roue seuil 2 (par exemple +g3).

8. Procédé selon l'une des revendications 1 à 6, caractérisé en ce que la constante de temps filtre en dehors de la régulation a pour valeur $(a_1)$, que lorsqu'au moins une roue est régulée, mais que la roue la plus rapide n'est pas en régulation, elle prend la valeur $(a_2)$ et que lorsque la roue la plus rapide est en régulation, elle prend la valeur $(a_3)$, sachant que $(a_1 < a_2 < a_3)$.

Fig.1

Fig.2